# EUROPÄISCHE PATENTANMELDUNG

(11) **EP 1 174 703 A2**
(43) Veröffentlichungstag der Anmeldung: **23.01.2002**
(21) Anmeldenummer: 01117232.7
(22) Anmeldetag: 16.07.2001
(51) Int. Cl.: G01N 1/40, B01D 1/00

(54) **Eindampfvorrichtung für Proben**

(30) Priorität: 18.07.2000 DE 10035297
(71) Anmelder: Barkey, Volker, D-33619 Bielefeld (DE)
(72) Erfinder: Barkey, Volker, D-33619 Bielefeld (DE)
(74) Vertreter: TER MEER STEINMEISTER & PARTNER GbR

(57) **Zusammenfassung**

Eine Eindampfvorrichtung für Proben umfaßt eine Anzahl von oben offenen Probengefäßen sowie eine Einrichtung zur Abgabe von gesonderten Gasstrahlen auf die Flüssigkeitsspiegel in den Probengefäßen. Die Einrichtung zur Abgabe von Gasstrahlen umfaßt eine oberhalb der Probengefäße (10,18) angeordnete Platte (16), in der Bohrungen (14) zur Durchleitung von Gasstrahlen in einer den Positionen der Probengefäße entsprechenden Anordnung vorgesehen sind.

## Beschreibung

Die Erfindung betrifft eine Eindampfvorrichtung für Proben mit einer Anzahl von oben offenen Probengefäßen sowie eine Einrichtung zur Abgabe von gesonderten Gasstrahlen auf die Flüssigkeitsspiegel in den Probengefäßen.

Eine Vorrichtung dieser Art ist beispielsweise aus DE 43 16 163 A1 bekannt. Bei der bekannten Vorrichtung ist eine Anzahl von Reagenzgläsern in einem rechteckigen Raster in einer Halterung angeordnet, und oberhalb der Reagenzgläser befindet sich eine Blaseinrichtung mit einer Anzahl von parallelen, nach unten gerichteten Blasrohren, die in die Nähe der Flüssigkeitsspiegel in den Reagenzgläsern abgesenkt werden können und dazu dienen, Luft oder ein anderes Gas zur Beschleunigung der Verdunstung auf die Flüssigkeitsspiegel in den Gläsern aufzublasen.

Wenn eine große Anzahl von sehr kleinen Proben eingedampft bzw. konzentriert werden soll, werden üblicherweise anstelle von Reagenzgläsern sogenannte Mikro- oder Nanotiterplatten verwendet, in denen sich nebeneinander zahlreiche feine Näpfe befinden, die als Probengefäße für geringe Flüssigkeitsmengen verwendet werden.

Aus der DE 299 17 883 U1 ist eine Ausführungsform bekannt, bei der Luft oder ein anderes Gas zum Austragen der durch Verdunstung entstehenden Gasphase der Proben quer über die Anordnung der Probennäpfe einer Mikro- oder Nanotiterplatte hinweggezogen wird.

Bei der Verwendung von Eindampfvorrichtungen in Laboratorien und dergleichen besteht immer wieder der Wunsch nach kurzen Bearbeitungszeiten. Es ist daher beispielsweise üblich, die Probengefäße zur Beschleunigung der Konvektion zu erwärmen sowie warme Luft oder ein warmes Gas zum Austragen der Gasphase aus den Probengefäßen zu verwenden. Bei Mikrotiterplatten ist es angesichts der geringen Abmessungen sehr aufwendig, einzelne Röhrchen in jedes der Näpfchen zu richten.

Ähnliche Schwierigkeiten ergeben sich bei sehr kleinen Einzelgefäßen, sogenannte Micro-Vials. Bei Nanotiterplatten ist es ausgeschlossen, eine geeignete Anordnung aus Einzelröhrchen herzustellen.

Der Erfindung liegt daher die Aufgabe zugrunde, eine Eindampfvorrichtung der eingangs genannten Art zu schaffen, die eine weitere Verkürzung des Eindampfvorganges ermöglicht.

Diese Aufgabe wird erfindungsgemäß dadurch gelöst, daß die Einrichtung zur Abgabe von Gasstrahlen eine oberhalb der Probengefäße angeordnete Platte umfaßt, in der sich Bohrungen zur Durchleitung der Gasstrahlen in einer den Positionen der Probengefäße entsprechenden Anordnung befinden.

Gemäß einer ersten Ausführungsform bildet die gelochte Platte den Boden eines auf Überdruck befindlichen Gehäuses, in das Luft oder ein anderes Gas eingeleitet wird. Das Gehäuse kann zugleich dazu dienen, dieses Gas zu erwärmen, jedoch kann das Gas auch bereits in erwärmtem Zustand in das Gehäuse eingeleitet werden. In jedem Falle wird die Platte genau so oberhalb der Anordnung der Probengefäße, insbesondere der Näpfe in einer Mikrotiterplatte ausgerichtet, daß das unter Druck stehende erwärmte Gas durch die Bohrungen strahlförmig nach unten austritt und auf die Flüssigkeitsspiegel in den Gefäßen oder Näpfen trifft.

Alternativ kann die gelochte Platte den oberen Abschluß eines Saugkastens bilden, in dem sich die Probengefäße befinden, und auch hier wird die Lochplatte so oberhalb der Gefäße oder Näpfe angeordnet, daß Gasstrahlen auf die Flüssigkeitsspiegel auftreffen.

In beiden Fällen läßt sich die Intensität der Gasstrahlen in einfacher Weise dahingehend regeln, daß auf der einen Seite die Gasphase möglichst wirksam ausgetragen wird, andererseits aber ein Flüssigkeitsaustritt aus den Probengefäßen, der zu einer Querkontamination der Proben untereinander führen kann, auf jeden Fall vermieden wird.

Im folgenden werden bevorzugte Ausführungsbeispiele der Erfindung anhand der beigefügten Zeichnung näher erläutert.
- Fig. 1: ist eine schematische Darstellung einer Eindampfvorrichtung gemäß der vorliegenden Erfindung, bei der ein Spülgas mit Druck zugeführt wird;
- Fig. 2: ist eine entsprechende Darstellung einer zweiten Ausführungsform, bei der das Spülgas durch Anordnung der Probengefäße in einer Unterdruckkammer angesaugt wird.

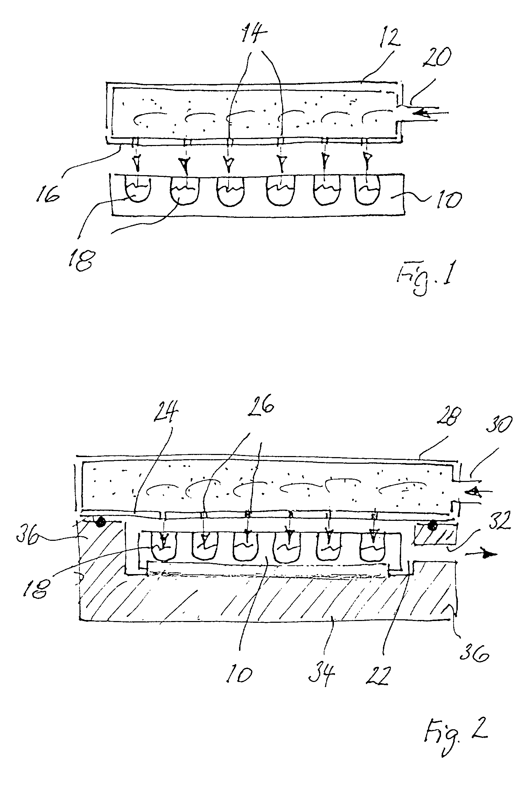

In Fig. 1 ist schematisch ein senkrechter Schnitt durch einen Mehrfachprobenträger 10, beispielsweise in der Form einer Mikrotiterplatte, gezeigt. Oberhalb des Mehrfachprobenträgers 10 befindet sich ein Druckkasten 12, dessen Form insgesamt beliebig ist, der jedoch einen unteren Boden aufweist, der durch eine mit einer Anzahl von feinen Bohrungen 14 versehene Platte 16 gebildet wird. Diese Bohrungen 14 bilden senkrechte Kanäle, durch die ein gerichteter Gasstrahl nach unten austritt. Die Bohrungen werden in dem Raster der einzelnen Probengefäße 18, die beispielsweise durch einzelne Näpfchen gebildet werden, angeordnet. Der Überdruck in dem Druckkasten 12 bewirkt, daß die erwähnten Gasstrahlen auf die Oberflächen der Proben in den Probengefäßen 18 auftreffen und die Gasphase oberhalb der Flüssigkeitsspiegel in den Probengefäβen austragen.

Der Druckkasten 12 kann Heizeinrichtungen aufweisen, da eine Erwärmung der Gasstrahlen weiter zu einer Beschleunigung der Verdunstung der Proben führt. Das Gas kann aber auch bereits in erwärmtem Zustand zugeführt werden, so daß der Druckkasten 12 lediglich die Funktion eines Verteilergehäuses aufweist. Ein angedeuteter Einlaß 20 dient der Zufuhr des Gases. Als Gas kommt in erster Linie Luft, aber auch Stickstoff oder andere Gase in Frage.

Bei der Ausführungsform gemäß Fig. 2 werden Gasstrahlen dadurch erzeugt, daß der Mehrfachprobenträger 10 in einer Kammer 22 angeordnet wird, die auf ihrer oberen Seite durch eine Platte 24 abgedeckt werden kann, die der Platte 16 am Boden des Druckkastens 12 entspricht und Bohrungen 26 in der Anordnung der Probengefäße 18 aufweist. Auch in diesem Falle bildet die Platte 24 bei der dargestellten Ausführungsform den Böden eines Kastens 28, der einen Einlaß 30 für das zu verwendende Gas aufweist. Der Kasten 28 kann beispielsweise dazu benutzt werden, das verwendete Gas zu erwärmen.

Die untere Kammer, in der sich der Mehrfachprobenträger 10 befindet, weist einen Auslaß 32 auf, der mit einer Unterdruckquelle verbunden ist, die in der Zeichnung nicht gezeigt ist. Die Kammer 22 ist schematisch dargestellt als auf der oberen Seite offener Kasten mit einem Boden 34 und seitlichen Wänden 36. Die Kammer kann ebenfalls dazu benutzt werden, die Probengefäße 18 zu erwärmen.

Es hat sich gezeigt, daß bei Anlegen eines geeigneten Unterdrucks innerhalb der Kammer 22 Luft oder ein sonstiges Gas nicht nur durch die Bohrungen 26 nach unten hindurchgezogen wird, sondern darüber hinaus gerichtete Gasstrahlen bildet, die auf die Flüssigkeitsspiegel der einzelnen Proben gerichtet werden.

## Patentansprüche

1. Eindampfvorrichtung für Proben mit einer Anzahl von oben offenen Probengefäßen sowie einer Einrichtung zur Abgabe von gesonderten Gasstrahlen auf die Flüssigkeitsspiegel in den Probengefäßen, **dadurch gekennzeichnet, daß** die Einrichtung zur Abgabe von Gasstrahlen eine oberhalb der Probengefäße (10,18) angeordnete Platte (16,24) umfaßt, in der Bohrungen (14,26) zur Durchleitung von Gasstrahlen in einer den Positionen der Probengefäße entsprechenden Anordnung vorgesehen sind.

2. Eindampfvorrichtung nach Anspruch 1, **dadurch gekennzeichnet, daß** die Platte (16) den Boden eines mit Druck beaufschlagten Druckkastens (12) bildet.

3. Eindampfvorrichtung nach Anspruch 1, **dadurch gekennzeichnet, daß** die Probengefäße (10,18) in einer auf Unterdruck gebrachten Kammer (22) angeordnet sind und daß die Platte (24) die Kammer (22) auf der oberen Seite abschließt.
